## Europäisches Patentamt
## European Patent Office
## Office européen des brevets

(19)

(11) Publication number: **0 235 867**
A1

# (12) EUROPEAN PATENT APPLICATION

(21) Application number: **87200353.8**

(22) Date of filing: **27.02.87**

(51) Int. Cl.⁴: **A 01 J 25/12, A 01 J 25/08**

(30) Priority: **04.03.86 NL 8600551**

(43) Date of publication of application: **09.09.87**
**Bulletin 87/37**

(84) Designated Contracting States: **AT BE CH DE ES FR GB GR IT LI LU NL SE**

(71) Applicant: **STORK FRIESLAND B.V., Stationsweg 84, NL-8401 DT Gorredijk (NL)**

(72) Inventor: **Weel, Cornelis, De Hoge Bomen 12, NL-9203 ND Drachten (NL)**

(74) Representative: **van der Kloet-Dorleijn, Geertruida W.F., Drs., EXTERPATENT Willem Witsenplein 4, NL-2596 BK 's-Gravenhage (NL)**

(54) **Method and apparatus for conveying portions of curd from a curd dispensing column to a cheese mould on a discharge track during cheese-making.**

(57) A method and apparatus is provided for conveying at least one portion of curd (6) from a curd drainage column (1) to a cheese mould (13) on a discharge track (14) during cheese-making. The portion of curd emerging from the drainage column is collected in an intermediate mould and cut off, said portion of curd being supported in vertical direction by a plunger plate (10). The intermediate mould with the portion of curd is pushed directly off the plunger plate onto a delivery plate (12) placed up against the plunger plate. The delivery plate with the portion of curd collected in the intermediate mould placed on it is then mould above the cheese mould and the delivery plate is rapidly withdrawn, so that the portion of curd falls in the cheese mould. Finally the cheese mould is placed on the discharge track.

Method and apparatus for conveying portions of curd
from a curd dispensing column to a cheese mould on a
discharge track during cheese-making.


The present invention relates to a method for
conveying at least one portion of curd from a curd
drainage column to a cheese mould on a discharge
track during cheese-making, the portion of curd emerging
from the drainage column being collected in an
intermediate mould and being cut off, said portion of
curd being supported in the vertical direction by a
plunger plate, the portion of curd collected in the
intermediate mould being pushed off the plunger plate
onto a delivery plate, the delivery plate being rapidly
withdrawn when it is located above the cheese mould, as
a result of which the portion of curd drops out of the
intermediate mould into the cheese mouls and the
filled cheese mould is finally placed on the discharge
track.

Such a method is known.

In said known method the portion of curd collected
in the intermediate mould and cut off is pushed off the
plunger plate onto a fixed feed through plate situated
next to the plunger plate. Then the portion of curd in
the intermediate mould is pushed off the fixed through feed plate onto the delivery plate located above the cheese mould. Thereafter the delivery plate is rapidly withdrawn from under the intermediate mould while the intermediate mould is securely held, as a result of which the portion of curd drops out of the intermediate mould into the cheese mould. When the delivery plate is withdrawn from beneath the filled intermediate mould, it slides under the fixed feed plate. The filled cheese mould is finally placed on the discharge track to be conveyed further.

The known equipment has, however, a number of disadvantages. When the portion of curd emerging from the drainage column is being cut off, crumbs at the leading edge of the knife which cuts off the portion curd may drop onto the fixed feed through plate. When the portion of curd collected in the intermediate mould is being pushed across the feed through plate, there is a risk that the portion of curd is contaminated and/or damaged at the bottom. In addition, the grains of curd present on the feed through plate may slide and roll over one another and cause air inclusions at the bottom of the portion of curd. There is also the risk that the portion of curd is further damaged while being pushed over from the feed through plate onto the delivery plate. Finally, as a result of the long path over which the portion of curd must be moved, damage may occur at the bottom of the portion of curd, in particular air inclusions. Said damage to the portion of curd is very disadvantageous and results in an impairment of the quality of the final product.

The object of the invention is therefore to provide a method for conveying portions of curd from a curd drainage column to a cheese mould in which the transport path is as short as possible and there is therefore as little risk as possible of damage to the portions of curd, so that the quality of the final product, the cheese, is as good as possible.

This object is achieved by a method of the type described in the introduction which is characterized in that, after it has been collected in the intermediate mould, the cut-off portion of curd is pushed directly from the plunger plate onto the delivery plate placed up against the plunger plate, the delivery plate with the portion of curd collected in the intermediate mould placed on it is moved above the chees mould, after which the delivery plate is rapidly withdrawn.

As a result of using the method according to the invention, the path over which the portion of curd has to be moved is limited to a minimum so that the risk of damage to the portion of curd, in particular to the bottom, is also limited to a minimum. Furthermore, it is no longer necessary to provide sills in the feed path since the delivery plate now no longer has to slide under a fixed feed through plate and can therefore be placed at the same height as the plunger plate so that this possible cause of damage is also removed.

Preferably, before the portion of curd is cut off, the delivery plate is placed at a distance from the plunger plate, as a result of which cutting grains can drop down past the plunger plate. This prevents cutting grains fall on the delivery plate as a result of which damage to the portion of curd due to the cutting grains might arise when the portion of curd in the intermediate mould is being pushed onto the delivery plate.

In order to prevent damage to the portion of curd when it is dropping into the cheese mould, the cheese mould is moved downwards while the portion of curd is dropping into the cheese mould, as a result of which air is prevented from penetrating the bottom of the portion of curd.

For this purpose the cheese mould is preferably supported by a piston and cylinder combination, the medium in the cylinder being kept at a pressure such that the piston and cylinder combination can hold the empty cheese mould precisely in position and, when the cheese mould starts to move downwards under the influence of the weight of the curd dropping into it, the piston and cylinder combination is activated and the cheese mould is moved further downwards. The movement of the cheese mould can thereby be accurately controlled.

The invention also relates to an apparatus for conveying at least one portion of curd from a curd drainage column to a cheese mould on a discharge track during cheese-making, comprising an intermediate mould for collecting a portion of curd emerging from the drainage column, a cutting element for cutting off the portion of curd, a plunger plate for supporting the portion of curd emerging from the drainage column, means for pushing the intermediate mould located on top of the plunger plate onto a delivery plate, and also means for rapidly withdrawing the delivery plate from beneath the intermediate mould when it is above the cheese mould, which apparatus is characterized in that it is provided with a movable delivery plate which, on the one hand, can be placed against the plunger plate at the same height and, on the other hand can be placed above the cheese mould.

This apparatus is preferably provided with uncouplable coupling means for coupling the intermediate mould to the delivery plate during the movement of the intermediate mould located above the delivery plate from the position next to the plunger plate to the position above the cheese mould.

In a practical embodiment of the apparatus, the coupling means consist of at least one lever mounted pivotably on the holder for the intermediate mould, which lever is provided at the free end with a hook which, looking in the direction from the plunger plate to the cheese mould, can engage behind the delivery plate, as a result of which, when the holder with the intermediate mould filled with curd in it, which is located above the delivery plate, is moved to the position above the cheese mould, the delivery plate is automatically entrained by the holder. When the delivery plate is withdrawn from underneath the intermediate mould, the lever is moved upwards and the delivery plate and the intermediate mould are uncoupled. The invention will now be explained by means of the description of an exemplary embodiment with reference to the drawing, wherein:

Figure 1 is a diagrammatic illustration of an apparatus for manufacturing portions of curd and conveying said portions of curd to a cheese mould according to the invention and

Figure 2 is a diagrammatic illustration of the various steps of the method according to the invention.

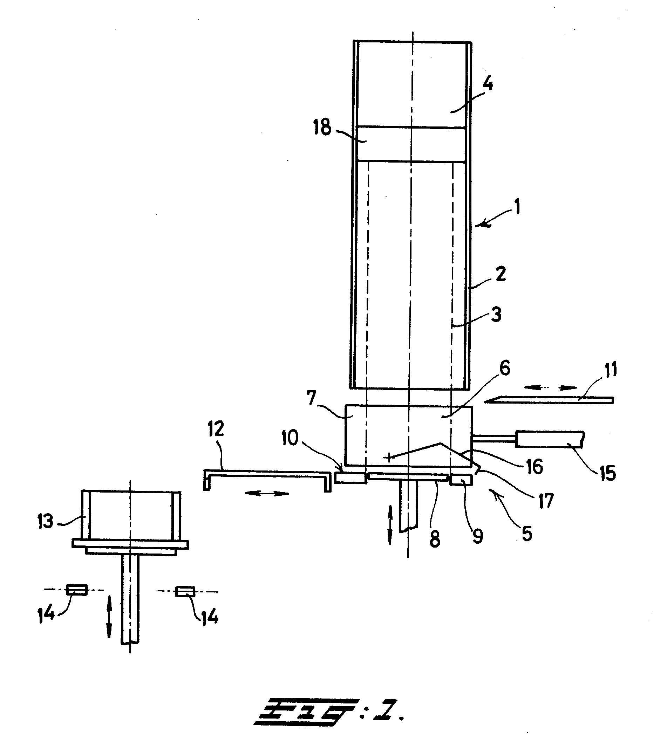

The apparatus shown diagrammatically in figure 1 comprises a curd drainage column indicated as a whole by 1. The drainage column 1 consists of a continuous outer jacket 2 and one or more perforated inner pipes 3 placed therein which together form the inner column of the drainage column 1. At the top of the drainage column 1 there is a supply container 4 for the curd to be drained, the bottom of which adjoins the top of the perforated inner pipes 3.

Beneath the drainage column 1 is collecting apparatus 5 for the curd 6 emerging from the drainage column. The collecting apparatus 5 comprises one or more intermediate mould, the number and the form of which correspond to the number and the cross-section of the inner pipes 3, which intermediate moulds are accommodated in a holder 7. A base plunger 8, adjustable in height, fits into each intermediate mould. In the lowermost position, a base plunger 8 forms, together with a plunger frame 9 surrounding it a plunger plate 10.

At the bottom of the drainage column 1 there is also provided a cutting element in the form of a plate-like knife 11 which can be moved in a direction transverse to the drainage column between the drainage column 1 and the collecting apparatus 5.

At the level of the plunger plate 10 there is provided a delivery plate 12 which can be moved backwards and forwards between a position immediately next to the plunger plate and a position above a cheese mould 13. The cheese mould is supported by a piston and cylinder combination, not shown, by means of which the cheese mould can be moved up and down. The cheese mould can be placed by means of said piston and cylinder combination on a conveyor track which is shown here diagrammatically by means of rollers 14.

The holder 7 with the cylinder combination 15 parallel to the plunger plate 10 and can be pushed onto the delivery plate placed next to the plunger plate and moved away. The holder 7 is provided with entrainment means in the form of at least one lever 16, pivotably mounted on the holder 7, which is provided at the free end with a hook 17. When the holder 7 with the intermediate moulds is placed on the delivery plate 12, said hook 17 can engage behind the delivery plate 12 and entrain the delivery plate 12 as the holder moves away.

The operation of the apparatus is as follows.

The curd 18 present in the supply container 4 sinks into the inner pipes 3 and is supported at the bottom by the base plunger 8 moved upwards through the intermediate moulds. The curd is drained in the perforated inner pipes 3, the liquid emerging from the curd ending up in the space between the pipes 3 and the outer jacket of the drainage column.

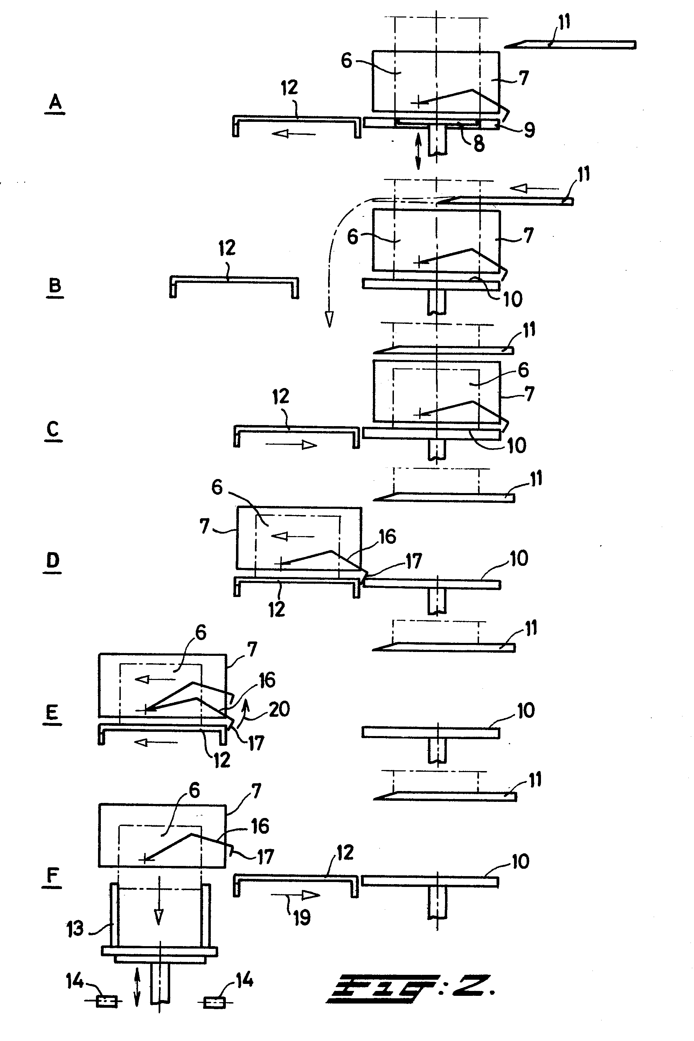

The base plungers 8 are moved downwards, the curd 6 emerging from the inner pipes sinking into the intermediate moulds. When the base plungers 8 have sunk so far that the desired cut-off height of the curd portions 6 has been reached, the knife 11 is moved between the column 3 and the collecting apparatus 6, as a result of which the portions of curd 6 are cut off. Then the plungers are moved down further until they are at the same height as the plunger frame 9. All this is shown in figures 2A and 2B.

In figure 2B it can furthermore be seen that the delivery plate 12 is situated at a distance from the plunger plate 10 while the portions of curd 6 are being cut off, as a result of which cutting grains produced during cutting can drop down between the plunger plate 10 and the delivery plate 12, and do not therefore fall on the delivery plate 12.

Subsequently the delivery plate 12 is placed against the plunger plate 10 (figure 2C) and the holder 7 with the intermediate moulds filled with the cut-off portions of curd 6 is pushed off the plunger plate 10 onto the delivery plate 12. This takes place by means of the piston and cylinder combination 15. At the same time the hook 17 of the lever 16, which is pivotably mounted on the holder 7, drops behind the delivery plate 12 (figure 2D). As the holder 7 moves away to the position above the cheese mould 13, the hook 17 entrains the delivery plate 12 (figure 2E). The lever 16 is then moved upwards in the direction of the arrow 20, as a result of which the holder with the intermediate moulds is uncoupled from the delivery plate 12. Finally, the delivery plate 12 is rapidly withdrawn from underneath the holder 7 with the intermediate moulds in the direction of the arrow 19 (figure 2F). The portions of curd 6 are then no longer supported and drop downwards into the cheese mould 13 located underneath.

In order to prevent a curd portion being damaged at the bottom by air penetration while dropping into the cheese mould, the cheese mould is moved downwards while the portion of curd is dropping. Since the pressure of the medium in the piston and cylinder combination which supports the cheese mould is adjusted so that only the cheese mould can be held in position, when the portion of curd drops into the cheese mould, the cheese mould will start to move downwards. This movement is indicated by a signal and said signal is used to activate the piston and cylinder combination and to move the cheese mould in the downward direction. As a result of this, the portion of curd drops with a relatively low velocity onto the base of the cheese mould, and this prevents air penetration on the bottom of the portion of curd from occurring. The filled cheese mould finally lands on the discharge track 14 and is taken away.

After this, a subsequent cheese mould can be placed in position and the next portion of curd emerging from the drainage column can be conveyed to said cheese mould.

From the above description it is evident that the portion of curd 6 emerging from the drainage column only has to be pushed off the plunger plate 10 onto the delivery plate 12. This path is very short and the risk of damage during the movement is minimal. Furthermore, there are no sills in the pushing path as in the known equipment, so that this possible cause of damage to the portion of curd is also absent. Finally, the collection of the portion of curd in the cheese container is such that here, too, the risk of damage to the portion of curd is limited to a minimum. All this leads to the result that the cheese produced from the portion of curd is of very high quality.

CLAIMS

1.      Method for conveying at least one portion of curd (6) from a curd drainage column (1) to a cheese mould (13) on a discharge track (14) during cheese-making, the portion of curd emerging from the drainage column being collected in an intermediate mould and being cut off, said portion of curd being supported in the vertical direction by a plunger plate (10), the portion of curd collected in the intermediate mould being pushed off the plunger plate onto a delivery plate (12), the delivery plate being rapidly withdrawn when it is located above the cheese mould, as a result of which the portion of curd drops out of the intermediate mould into the cheese mould and the filled cheese mould is finally placed on the discharge track, characterized in that, after it has been collected in the intermediate mould, the cut-off portion of curd (6) is pushed directly off the plunger plate (10) onto the delivery plate (12) placed up against the plunger plate, the delivery plate (12) with the portion of curd collected in the intermediate mould placed on it is moved above the cheese mould (13), after which the delivery plate (12) is rapidly withdrawn.

2.      Method according to Claim 1, characterized in that, before the portion of curd (6) is cut off, the delivery plate (12) is placed at a distance from the plunger plate (10), as a result of which cutting grains can drop down past the plunger plate (10).

3.      Method according to Claim 1, characterized in that the cheese mould (13) is moved downwards while the portion of curd (6) is dropping into the cheese mould (13).

4.      Method according to Claim 3, characterized in that the cheese mould (13) is supported by a piston and cylinder combination, the medium in the cylinder being kept at a pressure such that the piston and cylinder

- 10 -

0 235 867

combination can hold the empty cheese mould (13) precisely in position and, when the cheese mould (13) starts to move downwards under the influence of the weight of the curd (6) dropping into it, the piston and cylinder combination is activated and the cheese mould (13) is moved further downwards.

5. Apparatus for conveying at least one portion of curd (6) from a curd drainage column (I) to a cheese mould (13) on a discharge track (14) during cheese-making, comprising an intermediate mould for collecting a portion of curd (6) emerging from the drainage column, a cutting element (11) for cutting off the portion of curd, a plunger plate (10) for supporting the portion of curd emerging from the drainage column, means (15) for pushing the intermediate mould located on top of the plunger plate onto the delivery plate, and also means for rapidly withdrawing the delivery plate from underneath the intermediate mould when it is above the cheese mould, characterized in that the apparatus is provided with a movable delivery plate (12) which, on the one hand, can be placed against the plunger plate (10) at the same height and, on the other hand, can be placed above the cheese mould (13).

6. Apparatus according to Claim 5, characterized in that it is provided with a incouplable coupling means (16, 17) for coupling the intermediate mould to the said delivery plate during movement of the intermediate mould located above the delivery plate from the position next to the plunger plate to the position above the cheese mould.

7. Apparatus according to Claim 6, characterized in that the coupling means consist of at least one lever (16) pivotably mounted on the holder (7) for the intermediate mould which lever is provided at the free end with a hook (17) which, looking in the direction from the plunger plate (10) to the cheese mould (13), can engage behind the delivery plate (12).

**0 235 867**

8.     Apparatus according to one of the Claims 5-7, characterized in that the equipment is provided with at least one piston and cylinder combination for supporting a cheese mould (13) and also control means for controlling the downward movement of the cheese mould (13) when the portion of curd (6) drops into it.

*Fig. 1.*

_Fig. 2._

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | NL-A-8 006 898 (KOOPMANS ENGINEERING B.V.) --- | | A 01 J 25/12 A 01 J 25/08 |
| A | FR-A-2 138 871 (HERMANN WALDNER KG) ----- | | |

**TECHNICAL FIELDS SEARCHED (Int. Cl.4)**

A 01 J

The present search report has been drawn up for all claims

| Place of search | Date of completion of the search | Examiner |
|---|---|---|
| THE HAGUE | 12-05-1987 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03.82